Europäisches Patentamt

European Patent Office

Office européen des brevets

(11) Numéro de publication: **0 318 384 B1**

## FASCICULE DE BREVET EUROPEEN

(45) Date de publication de fascicule du brevet: **16.09.92**

(51) Int. Cl.⁵: **C22B 58/00**, C22B 3/00, C01G 15/00

(21) Numéro de dépôt: **88402954.7**

(22) Date de dépôt: **24.11.88**

(54) **Procédé de traitement hydrométallurgique d'une solution de chlorure d'indium.**

(30) Priorité: **24.11.87 FR 8716290**

(43) Date de publication de la demande:
**31.05.89 Bulletin 89/22**

(45) Mention de la délivrance du brevet:
**16.09.92 Bulletin 92/38**

(84) Etats contractants désignés:
**AT BE CH DE ES FR GB GR IT LI LU NL SE**

(56) Documents cités:
EP-A- 0 008 992          CA-A- 1 218 237
FR-A- 2 317 366          GB-A- 1 171 656
US-A- 3 180 812          US-A- 4 292 284

(73) Titulaire: **METALEUROP S.A.**
**Le Péripole 1 58, rue Roger-Salengro**
**F-94120 Fontenay-sous-Bois(FR)**

(72) Inventeur: **Le Ouesne, Yves**
**35, rue Mathurin Régnier**
**F-75015 Paris(FR)**
Inventeur: **Fossi, Paolo**
**52, avenue de Cressac**
**F-78190 Elancourt(FR)**

(74) Mandataire: **Martin, Jean-Jacques et al**
**Cabinet REGIMBEAU 26, Avenue Kléber**
**F-75116 Paris(FR)**

Rank Xerox (UK) Business Services

**Description**

La présente invention a pour objet la récupération de l'indium et d'éventuels éléments connexes contenus dans une solution de chlorures d'indium et de divers autres éléments et notamment de chlorure d'étain et d'antimoine ; elle a plus spécifiquement pour objet de séparer l'étain et l'antimoine d'avec l'indium.

Le développement de nouvelles applications de l'indium, parmi lesquelles on peut citer les composés III-V, films transparents conducteurs utilisés en affichage et en photovoltaïque et les oxydes mixtes d'étain-indium qui permettent de multiplier l'effet de serre par 3, a rendu particulièrement attractive la récupération de cet élément qui se trouve fréquemment associé aux minerais des métaux non-ferreux usuels, notamment la blende, la chalcopyrite et la galène.

La récupération à partir d'une solution de sulfate a déjà fait l'objet de nombreuses études et de brevets, notamment la demande de brevet français publiée sous le numéro FR-A-2.435.533.

Il arrive qu'au cours des procédés pyrométallurgiques l'indium s'accumule dans diverses phases qu'il est facile de soumettre à une dissolution chlorée, oxydante ou non, pour donner une solution de chlorure d'indium. Certaines solutions de chlorure métallique, telles qui celles qui sont produites par le procédé décrit dans le brevet français 2.317.366, peuvent contenir de l'indium qu'il peut être opportun de récupérer.

La séparation de l'indium d'avec l'étain et l'antimoine, éléments dont il est proche chimiquement, est connue techniquement mais les solutions qui ont été proposées ne sont pas satisfaisantes et sont coûteuses à mettre en oeuvre. On a, en particulier, proposé des extractions avec des composés organiques du type éther ou du type cétone ; plus spécifiquement, de nombreuses études ont porté sur la méthyl-isobutyl-cétone.

Cependant, tous ces produits sont volatils et présentent des risques d'inflammation et d'explosion non négligeables.

Il a également été proposé un procédé d'extraction sélectif d'indium à partir d'une solution contenant du chlorure d'indium ainsi que d'autres métaux dans de l'acide chlorhydrique concentré, au moyen d'un polybutyle phosphate contenu dans un diluant organique. Cependant, cette méthode ne permet pas de contrôler le potentiel rédox de la solution.

C'est la raison pour laquelle un des buts de la présente invention est de fournir un procédé de traitement hydrométallurgique de solution de chlorure d'indium, mélangé éventuellement avec du chlorure d'étain ou du chlorure d'antimoine, qui utilise un extractant qui ne soit ni inflammable ni explosif.

Un autre but de la présente invention est un procédé qui permette une bonne séparation du chlorure d'indium d'avec le chlorure d'antimoine et celui d'étain.

Ces buts, et d'autres qui apparaitront par la suite, sont atteints au moyen d'un procédé de traitement hydrométallurgique d'une solution de chlorure d'indium et d'au moins un élément choisi dans le groupe constitué par l'étain et l'antimoine, caractérisé par le fait qu'il comporte les étapes suivantes :

a) ajustement de la teneur en ion chlorure libre par addition de chlorure alcalin ou alcalino-terreux ou de leur mélange et de leur acidité par addition d'acide chlorhydrique ;

b) mise en contact de ladite solution de chlorure d'indium avec une phase organique contenant du phosphate de trialcoyle ;

c) désextraction de ladite phase organique par mise en contact de cette dernière avec une solution d'acide chlorhydrique de 0,1 à 3 N, pour obtenir une solution de chlorure d'indium ;

d) désextraction basique au moyen d'un hydroxyde de métal alcalin.

L'ajustement de la teneur en ion chlorure et en acidité est important car il est souhaitable d'extraire la quasi-totalité des éléments valorisables et parce que, pour obtenir cette récupération au moyen du phosphate de trialcoyle, la concentration en ion chlorure et l'acidité jouent un rôle très important. De préférence, on ajuste la teneur en ion chlorure libre à une valeur comprise entre 3 et 12 N et l'acidité à une valeur comprise entre 1 et 6 N. Cet ajustement se fait de préférence au moyen de chlorure de calcium ; un domaine particulièrement avantageux est une solution de chlorure d'indium qui contient, en outre, de 5 à 10 N d'ions chlorure, préférablement sous forme de chlorure de calcium et de 1 à 3 N d'acidité. On se situe généralement dans les valeurs médianes de ces fourchettes.

Par "ion chlorure libre" il faut comprendre les ions chlorure non associés à un élément dont on désire l'extraction par le phosphate de trialcoyle sous forme d'un complexe non chargé (par exemple $InCl_3$, $HInCl_4$...) ; d'une manière générale, on considère comme ion chlorure libre les ions chlorure associés à l'acide chlorhydrique ou aux métaux alcalins ou alcalino-terreux. Dans le cadre de la présente invention on comptera comme ion alcalin les ions ammonium.

Dans le but de mieux contrôler l'extraction liquide-liquide, et ce tant au niveau de la viscosité qu'à celui des propriétés chimiques, il est souhaitable que le phosphate de trialcoyle soit dissout dans des

2

hydrocarbures aromatiques ; en général on choisit comme hydrocarbures aromatiques des fractions pétrolières à point d'ébulition et à point éclair élevés, du type de celui vendu sous la marque Solvesso® 150. Généralement, pour des raisons économiques, on utilise comme phosphate de trialcoyle le phosphate de tributyle, plus connu sous l'abréviation de son sigle anglo-saxon TBP.

La phase organique contient de préférence de 20 à 60 %, avantageusement de 30 à 50 %, de phosphate de trialcoyle en volume.

Un des buts de la présente invention est de récupérer, avec un rendement le plus élevé possible, les métaux valorisables contenus dans la solution chlorée tout en étant le plus sélectif possible vis à vis des impuretés. Comme cela est décrit ci-dessus une bonne extraction par les phosphates de trialcoyle peut être obtenue par la régulation des niveaux chlorure et acide de la solution. La sélectivité, quant à elle, outre les techniques usuelles notamment celle qui consiste à augmenter le nombre d'étages d'extraction, est obtenue en jouant sur la quantité de phosphate de trialcoyle mise en contact avec la solution à extraire, en tenant compte du fait que les complexes formés entre le phosphate de trialcoyle et le complexe chloré à extraire nécessitent dans les conditions usuelles trois molécules de phosphate pour un atome d'élément à extraire.

Compte tenu du fait que le phosphate de tributyle, ci-après désigné par le sigle anglo-saxon de TBP, est le phosphate de trialcoyle d'usage le plus courant et le plus économique, le TBP servira dans la suite de la description de paradigme de cette famille.

Ainsi, les équations d'extraction de l'étain et de l'indium sont pour l'essentiel du type :

$$2\,H^+ + Sn^{4+} + 6\,Cl^- + 3\,TBP \quad H_2(SnCl_6) - 3\,TBP$$
$$H^+ + In^{3+} + 4\,Cl^- + 3\,TBP \quad H(InCl_4) - 3\,TBP.$$

Les principales autres espèces extraites sont :

$SnCl_4$, 2 TBP ; $SnHCl_3$, 3 TBP ; $Sn(OH)Cl_3$, 3 TBP ; $InCl_3$, 3 TBP ; $InCl_4$, 3 TBP. Il existe aussi les espèces parasites HCl, TBP et HCl, 2 TBP.

La réaction avec l'antimoine est du même type et met également en jeu trois molécules de TBP. Ainsi, pour le calcul de la stoechiométrie, on prendra donc une valeur de trois molécules de TBP pour un atome d'élément à extraire.

Ainsi, pour obtenir une bonne sélectivité il convient de régler le rapport phase organique/phase aqueuse (O/A) et les débits des diverses phases, de manière que la quantité de phosphate de trialcoyle mise en contact avec ladite solution de chlorure d'indium et d'au moins un élément choisi dans le groupe constitué par l'étain et l'antimoine soit comprise entre 1 fois et 1 fois et demie, de préférence entre 1 fois et 1,2 fois, la quantité stoechiométrique nécessaire à l'extraction complète de l'étain, de l'antimoine et de l'indium.

Lorsque le fer III est présent à une teneur significative, c'est-à-dire à une teneur supérieure à une valeur de l'ordre de un gramme par litre, il convient de rajouter à cette quantité stoechiométrique la quantité stoechiométrique nécessaire pour extraire le fer III, lequel est solvaté par trois molécules de TBP.

En général, on choisit une valeur de l'ordre de 10 % au-dessus de la quantité stoechimétrique.

La détermination du bon rapport à l'intérieur de ces fourchettes dépend de la température, qui peut varier de l'ambiante à celle permise par une utilisation sûre du diluant choisi (60 - 70°C), du taux de dilution, des impuretés et d'un arbitrage entre une bonne récupération et une bonne sélectivité.

La récupération visée est de préférence supérieure à 90 %, avantageusement à 95 %.

Cette technique donne des résultats satisfaisants lorsque le rapport molaire entre l'indium d'une part, et la somme antimoine et étain d'autre part, est supérieure à un septième, avantageusement à un cinquième. Lorsque ce rapport est inférieur aux valeurs ci-dessus, il est souhaitable d'éliminer une partie de l'antimoine et de l'étain par une extraction préalable à l'extraction principale qui portera sur l'indium.

Cela peut être réalisé par incorporation au procédé d'une étape a') avant l'étape b) dans laquelle ladite solution de chlorure d'indium et au moins un élément choisi dans le groupe constitué par l'étain et l'antimoine est mise en contact avec une solution de phosphate de trialcoyle, la quantité de phosphate de trialcoyle mise en contact étant inférieure à la quantité stoechiométriquement nécessaire à l'extraction de la totalité de l'étain et de l'antimoine, de préférence inférieure à 80 % de cette valeur. Lorsque le fer III est présent à une teneur significative, c'est-à-dire à une teneur supérieure à une valeur de l'ordre de un gramme par litre, il convient de rajouter à cette quantité stoechiométrique la quantité stoechiométrique nécessaire pour extraire le fer III, lequel est solvaté par trois molécules de TBP. En tout état de cause, cette quantité devra être telle que le rapport indium/antimoine + étain après extraction soit dans les normes spécifiées ci-dessus. Afin d'éviter des mouvements d'acidité lors de la mise en contact des phases TBP avec les solutions indifères à extraire, il est préférable de mettre en contact préalablement ces phases avec une solution d'acide chlorhydrique 2 N environ.

Lorsque l'arsenic est présent de manière significative dans les solutions indifères il est préférable de régler le potentiel redox de ladite solution de manière que le rapport arsenic V/arsenic total soit au moins égal à 90 %, de préférence à 95 %. En effet, et c'est l'un des enseignements de la présente invention, dans les conditions d'extraction décrites par la présente demande, l'arsenic V est beaucoup moins bien extrait que l'arsenic III.

L'étape c) de désextraction joue un rôle très important pour obtenir une solution de désextraction pauvre en étain, antimoine et, le cas échéant, en fer et autres éléments co-extraits. Cette étape doit être menée de manière telle que la concentration finale totale en ions chlorure après désextraction soit au moins égale à 2 N, de préférence comprise entre 3 et 8 N, en général aux alentours de 5-6 N. Cette teneur finale en ions chlorure peut être réglée soit en jouant sur la teneur en acide chlorhydrique initialement présent dans la solution de désextraction, soit en jouant sur le rapport O/A et sur la teneur en indium de la phase organique. Il est à noter que pour jouer sur la teneur en indium de la phase organique l'étape d'extraction préalable a') a une grande importance sur la concentration en indium dans la phase organique. La solution de chlorure d'indium obtenue après désextraction à l'étape c) de la phase organique peut être soumise à une extraction par une phase organique TBP non chargée, le rapport O/A étant réglé de manière qu'il y ait de 2 à 5 fois la quantité stoechiométriquement nécessaire pour extraire la totalité de l'étain présent dans cette solution de chlorure d'indium.

Les exemples qui suivent et qui ne présentent aucun caractère limitatif ont pour but de mettre les spécialistes à même de déterminer aisément les conditions opératoires qu'il convient d'utiliser dans chaque cas particulier.

Exemple 1

Une solution $PHA_{inf}$ est mise en contact avec une phase organique contenant 40 % de TBP et 60 % de SOLVESSO® 150 (en volume), suivant un rapport phase organique sur phase aqueuse de 0,8, à contre-courant sur une batterie de 5 mélangeurs-décanteurs. On obtient après mise à l'équilibre chimique de la batterie, une phase organique $PHO_{eff1}$ dont la composition, ainsi que celle $PHA_{eff1}$ est donnée ci-après.

Dans une deuxième étape, on met en contact la phase organique $PHO_{eff1}$ chargée en étain, indium et antimoine avec une phase aqueuse titrant HCl = 2 N, suivant un rapport O/A = 8, à contre-courant sur une batterie de 4 mélangeurs-décanteurs. On désextrait ainsi totalement l'indium de la phase organique et on obtient, après mise à l'équilibre chimique de la batterie, une phase organique $PHO_2$ et une phase aqueuse de désextraction $PHA_{eff2}$ concentrée en indium dont les compositions respectives sont données dans le tableau ci-après.

Dans une troisième étape, on met en contact la phase organique $PHO_{eff2}$ chargée en étain et antimoine avec une phase aqueuse titrant NaOH = 4,5 N, suivant un rapport O/A = 1,5, à co-courant dans un réacteur agité. On désextrait ainsi totalement l'antimoine et l'étain et on obtient un mélange triphasique qui, après filtration et décantation, donne une phase organique ne contenant plus d'élément métallique et recyclable à l'extraction, une phase aqueuse sodique $PHA_{eff3}$ riche en étain et un gâteau solide d'antimoniate de soude. La composition de $PHA_{eff3}$ est donnée dans le tableau ci-après.

| Espèces chimiques | PHASES | | | | | |
|---|---|---|---|---|---|---|
| | $PHA_{inf}$ | $PHA_{eff1}$ | $PHO_{eff1}$ | $PHA_{eff2}$ | $PHO_{eff2}$ | $PHA_{eff3}$ |
| Sn (g/l) | 25 | 0,02 | 31,2 | 12 | 29,7 | 44,6 |
| In (g/l) | 7 | 0,02 | 8,7 | 70 | 0 | 0 |
| Sb (g/l) | 2 | 0,004 | 2,5 | 3 | 2,1 | 0,007 |
| Pb (g/l) | 21,4 | 21,4 | 0,002 | 0,001 | 0,002 | |
| Cu (g/l) | 22,0 | 22,0 | 0,002 | 0,016 | 0,002 | |
| Zn (g/l) | 2,0 | 2,0 | 0,034 | 0,3 | 0,002 | |
| $CaCl_2$ (M) | 3 | 3 | | | | |
| $H^+$ (M) | 2 | 2 | | 3,5 | | |
| $OH^-$ (M) | | | | | | 2,5 |

Du tableau ci-dessus on note que le rapport molaire dans $PHA_{inf}$ entre indium et étain plus antimoine est inférieur à 0,5, que le taux de récupération lors de l'extraction est supérieur à 99 %, que la sélectivité de l'extraction de l'étain, de l'antimoine et de l'indium est quasi totale vis-à-vis des autres éléments extractibles tels que le cuivre et le zinc et que le facteur d'enrichissement de l'indium dans la phase de désextraction $PHA_{eff2}$ est supérieur à 20 par rapport à l'étain et supérieur à 70 par rapport à l'antimoine.

Exemple 2 : Purge préalable de l'étain, de l'antimoine et du fer

Le but du présent exemple est de montrer la possibilité d'une séparation sélective de l'étain, de l'antimoine et du fer d'avec l'indium en utilisant le mélange TBP.

Une solution dont la composition est indiquée ci-après et titrant HCL 2 N et $CaCl_2$ 3 M est mise en contact avec un mélange TBP-SOLVESSO (40-60 % en volume équivalant à 1,4 M), à contre-courant, dans une batterie de deux étages de mélangeurs-décanteurs. Le rapport O/A est choisi de manière telle que la quantité de TBP mise en jeu soit celle qui fixe stoechiométriquement la totalité de l'antimoine et du fer ainsi que 80 % de l'étain. Dans le cas présent le rapport O/A est de 0,55.

Les résultats sont rassemblés dans le tableau ci-après.

| Elements (g/l) | Sb | Sn | In | Fe |
|---|---|---|---|---|
| Influent | 3,1 | 28,5 | 6,4 | 0,48 |
| Raffinat | 0,1 | 4,4 | 6,3 | 0,05 |
| Solvant chargé | 5,4 | 43,8 | 0,5 | 0,87 |
| Rendement d'extraction (%) | 97 | 84 | 1,3 | 100 |

On confirme ainsi la possibilité d'extraire la presque totalité du fer et de l'antimoine, 84 % de l'étain sans extraction significative de l'indium.

Exemple 3 : Purification de la solution de désextraction

Le but est d'éliminer l'étain contenu dans une solution acide de chlorure d'indium provenant de l'étape c) du procédé.

Au cours de l'essai, on contacte la solution aqueuse avec une phase organique TBP 40 % SOLVESSO 150 60 % à contre-courant dans une batterie de trois étages de mélangeurs-décanteurs. Le rapport O/A est calculé de façon à extraire la presque totalité de l'étain sans entraîner trop d'indium. Dans la cas présent le rapport O/A est de 0,33.

Les résultats sont rassemblés dans le tableau ci-après.

| Elements (g/l) | Sn | In | Sb |
|---|---|---|---|
| Influent | 10 | 70 | 1,2 |
| Raffinat | 0,1 | 68,7 | 0,35 |
| Solvant chargé | 30 | 3,9 | 2,6 |
| Rendement d'extraction (%) | 99 | 2 | 71 |

On confirme la possibilité d'épurer en étain une solution de chlorure d'indium. On élimine en même temps une grande partie de l'antimoine contenu.

Le solvant ainsi chargé en étain peut être recyclé vers l'étape b).

**Revendications**

**1.** Procédé de traitement hydrométallurgique d'une solution de chlorure d'indium et d'au moins un élément choisi dans le groupe constitué par l'étain et l'antimoine, caractérisé par le fait qu'il comprend les étapes suivantes :
a) ajustement de la teneur en ion chlorure libre entre 3 et 12 N par addition de chlorure alcalin ou alcalino-terreux ou de leur mélange et en acidité entre 1 et 6 N par addition d'acide chlorhydrique ;
b) mise en contact de ladite solution de chlorures avec une phase organique contenant du phosphate de trialcoyle ;
c) désextraction de ladite phase organique par mise en contact de cette dernière avec une solution d'acide chlorhydrique de 0,1 à 3 N, pour obtenir une solution aqueuse contenant le chlorure d'indium ;
d) désextraction basique de la phase organique résultant de l'étape c) au moyen d'un hydroxyde de métal alcalin pour récupérer l'étain et/ou l'antimoine.

2. Procédé selon la revendication 1, caractérisé par le fait que le chlorure alcalin ou alcalino-terreux de l'étape a) est du chlorure de calcium.

3. Procédé selon les revendications 1 et 2 prises séparément, caractérisé par le fait que la phase organique est une solution de 20 à 60 % en volume de phosphate de trialcoyle dissous dans un hydrocarbure aromatique.

4. Procédé selon la revendication 3, caractérisé par le fait que ledit hydrocarbure aromatique est une fraction pétrolière.

5. Procédé selon les revendications 1 à 4, prises séparément, caractérisé par le fait que le rapport phase organique/phase aqueuse et les débits des divers phases sont réglés de manière telle que quantité de phosphate de trialcoyle mise en contact avec ladite solution de chlorure d'indium et d'au moins un élément choisi dans le groupe constitué par l'étain et l'antimoine est comprise entre 1 fois et 1 fois et demie la quantité stoechiométriquement nécessaire à l'extraction complète de l'étain, de l'antimoine et de l'indium.

6. Procédé selon la revendication 5, caractérisé par le fait que ladite quantité de phosphate de trialcoyle est comprise entre 1 fois et 1,2 fois la quantité stoechiométriquement nécessaire à l'extraction complète de l'étain, de l'antimoine et de l'indium.

7. Procédé selon les revendications 1 à 6 prises séparément, caractérisé par le fait qu'il comporte une étape a') avant l'étape b), dans laquelle ladite solution de chlorure d'indium et d'au moins un élément choisi dans le groupe constitué par l'étain et l'antimoine est mise en contact avec une solution de phosphate de trialcoyle, la quantité de phosphate de trialcoyle mise en contact étant inférieure à la quantité stoechiométriquement nécessaire à l'extraction de la totalité de l'étain et de l'antimoine.

8. Procédé selon les revendications 1 à 7 prises séparément, caractérisé par le fait que préalablement à l'étape b) ladite phase organique est mise en contact avec une solution d'acide chlorhydrique 2 N.

9. Procédé selon les revendications 1 à 8 prises séparément, caractérisé par le fait que le potentiel redox de ladite solution de chlorure d'indium et d'au moins un élément du groupe constitué par l'étain et l'antimoine est réglé de manière que le rapport arsenic V/arsenic total est au moins égal à 90 %.

10. Procédé selon la revendication 9 , caractérisé par le fait que le potentiel redox de ladite solution de chlorure d'indium et d'au moins un élément du groupe constitué par l'étain et l'antimoine est réglé de manière que le rapport arsenic V/arsenic total est au moins égal à 95 %.

## Claims

1. Process for the hydrometallurgical treatment of a solution of indium chloride and at least one element selected from the group comprising tin and antimony, characterized in that it comprises the following steps :
   (a) adjustment of the concentration of free chloride ion between 3 and 12 N by addition of a chloride of an alkali metal or a chloride of an alkaline earth metal or a mixture of these and adjustment of their acidity between 1 and 6 N by addition of hydrochloric acid ;
   (b) bringing the said solution of chlorides into contact with an organic phase comprising trialkyl phosphate ;
   (c) reextraction of the said organic phase by bringing the latter into contact with a solution of 0.1 to 3 N hydrochloric acid, to obtain an aqueous solution containing the indium chloride ;
   (d) basic reextraction of the organic phase resulting from step (c) using an alkali metal hydroxide to recover tin and/or antimony.

2. Process according to Claim 1, characterized in that the alkali metal chloride or alkaline earth metal chloride of step (a) is calcium chloride.

3. Process according to any one of Claims 1 and 2, characterized in that the organic phase is a solution of 20 to 60 % by volume of trialkyl phosphate dissolved in an aromatic hydrocarbon.

4. Process according to Claim 3, characterized in that the said aromatic hydrocarbon is a petroleum fraction.

5. Process according to any one of Claims 1 to 4, characterized in that the ratio organic phase/aqueous phase and the outputs of the various phases are controlled in such a way that the quantity of trialkyl phosphate placed in contact with the said solution of indium chloride and the chloride of at least one element selected within the group comprising tin and antimony is in the range of 1 to 1 1/2 times the stoichiometric quantity necessary for the complete extraction of tin, antimony and indium.

6. Process according to Claim 5, characterized in that the said quantity of trialkyl phosphate is in the range of 1 to 1.2 times the stoichiometric quantity necessary for the complete extraction of tin, antimony and indium.

7. Process according to any one of Claims 1 to 6, characterized in that it comprises a step (a'), before step (b), in which the said solution of indium chloride and the chloride of at least one element selected within the group comprising tin and antimony is placed in contact with a solution of trialkyl phosphate, the quantity of trialkyl phosphate which is placed in contact being less than the stoichiometric quantity necessary for the extraction of the whole of the tin and antimony.

8. Process according to any one of Claims 1 to 7, characterized in that prior to step (b) the said organic phase is placed in contact with a 2 N solution of hydrochloric acid.

9. Process according to any one of Claims 1 to 8, characterized in that the redox potential of the said solution of indium chloride and the chloride of at least one element of the group comprising tin and antimony is controlled in a way such that the ratio arsenic V/total arsenic is at least equal to 90 %.

10. Process according to Claim 9, characterized in that the redox potential of the said solution of indium chloride and the chloride of at least one element of the group comprising tin and antimony is controlled in such a way that the ratio arsenic V/total arsenic is at least equal to 95 %.

**Patentansprüche**

1. Verfahren zur hydrometallurgischen Behandlung einer Chloridlösung von Indium und wenigstens einem aus der aus Zinn und Antimon gebildeten Gruppe gewählten Element,
dadurch **gekennzeichnet,** daß es die folgenden Schritte aufweist:
a) Einstellung des Gehalts an freiem Chloridion zwischen 3 und 12 N durch Zusatz von Alkali- oder Erdalkalichlorid oder deren Gemisch und an Azidität zwischen 1 und 6 N durch Zusatz von Salzsäure;
b) Kontaktierung der Lösung von Chloriden mit einer organischen, Trialkylphosphat enthaltenden Phase;
c) Reextraktion der organischen Phase durch deren Kontaktierung mit einer Salzsäurelösung von 0,1 bis 3 N, um eine wässerige, das Indiumchlorid enthaltende Lösung zu erhalten;
d) basische Reextraktion der vom Schritt c) stammenden organischen Phase mittels eines Alkalimetallhydroxids zur Gewinnung des Zinns und/oder des Antimons.

2. Verfahren nach dem Anspruch 1,
dadurch gekennzeichnet,
daß das Alkali- oder Erdalkalichlorid des Schritts a) Calciumchlorid ist.

3. Verfahren nach den getrennt genommenen Ansprüchen 1 und 2, dadurch gekennzeichnet, daß die organische Phase eine Lösung von 20 bis 60 Vol.% von in einem aromatischen Kohlenwasserstoff gelöstem Trialkylphosphat ist.

4. Verfahren nach dem Anspruch 3,
dadurch gekennzeichnet,

daß der aromatische Kohlenwasserstoff eine Erdölfraktion ist.

5. Verfahren nach den getrennt genommenen Ansprüchen 1 bis 4, dadurch gekennzeichnet, daß das Verhältnis organische Phase/wässerige Phase und die Durchsätze der verschiedenen Phasen derart reguliert werden, daß die in Kontakt mit der Chloridlösung von Indium und wenigstens einem aus der aus Zinn und Antimon gebildeten Gruppe gewählten Element gebrachte Trialkylphosphatmenge im Bereich vom 1-fachen bis 1,5-fachen der zur vollständigen Extraktion des Zinns, des Antimons und des Indiums stöchiometrisch erforderlichen Menge ist.

6. Verfahren nach dem Anspruch 5, dadurch gekennzeichnet, daß die Trialkylphosphatmenge im Bereich vom 1-fachen bis 1,2-fachen der zur vollständigen Extraktion des Zinns, des Antimons und des Indiums stöchiometrisch erforderlichen Menge ist.

7. Verfahren nach den getrennt genommenen Ansprüchen 1 bis 6, dadurch gekennzeichnet, daß es vor dem Schritt b) einen Schritt a') aufweist, in dem die Chloridlösung von Indium und wenigstens einem aus der aus Zinn und Antimon gebildeten Gruppe gewählten Element mit einer Trialkylphosphatlösung kontaktiert wird, wobei die in Kontakt gebrachte Trialklyphosphatmenge geringer als die zur Extraktion der Gesamtheit des Zinns und des Antimons stöchiometrisch erforderliche Menge ist.

8. Verfahren nach den getrennt genommenen Ansprüchen 1 bis 7, dadurch gekennzeichnet, daß die organische Phase vor dem Schritt b) mit einer 2N Salzsäurelösung kontaktiert wird.

9. Verfahren nach den getrennt genommenen Ansprüchen 1 bis 8, dadurch gekennzeichnet, daß das Redoxpotential der Chloridlösung von Indium und wenigstens einem aus der aus Zinn und Antimon gebildeten Gruppe gewählten Element derart reguliert wird, daß das Verhältnis "Arsen V/Arsen gesamt" wenigstens gleich 90 % ist.

10. Verfahren nach dem Anspruch 9, dadurch gekennzeichnet, daß das Redoxpotential der Chloridlösung von Indium und wenigstens einem aus der aus Zinn und Antimon gebildeten Gruppe gewählten Element derart reguliert wird, daß das Verhältnis "Arsen V/Arsen gesamt" wenigstens gleich 95 % ist.